(19) Europäisches Patentamt / European Patent Office / Office européen des brevets

(11) **EP 3 078 942 B1**

(12) **EUROPEAN PATENT SPECIFICATION**

(45) Date of publication and mention
of the grant of the patent:
**30.01.2019 Bulletin 2019/05**

(51) Int Cl.:
*G01F 22/00* (2006.01)   *F24H 1/00* (2006.01)
*G01K 17/08* (2006.01)   *F24H 9/20* (2006.01)
*F24H 1/20* (2006.01)   *G01F 25/00* (2006.01)

(21) Application number: **16164420.8**

(22) Date of filing: **08.04.2016**

(54) **METHODS FOR DETERMINING A VOLUME OF LIQUID AT A PREDETERMINED TEMPERATURE, FOR CALCULATING QUANTITIES OF THERMAL ENERGY, AND FOR DETERMINING A PROFILE OF HOT WATER CONSUMPTION**

VERFAHREN ZUR BESTIMMUNG EINES FLÜSSIGKEITSVOLUMENS BEI EINER VORHER FESTGELEGTEN TEMPERATUR ZUR BERECHNUNG VON WÄRMEENERGIEMENGEN UND ZUR BESTIMMUNG EINES PROFILS VON HEISSWASSERVERBRAUCH

PROCÉDÉS DE DÉTERMINATION D'UN VOLUME DE LIQUIDE À UNE TEMPÉRATURE PRÉDÉTERMINÉE, DE CALCUL DE QUANTITÉS D'ÉNERGIE THERMIQUE ET DE DÉTERMINATION D'UN PROFIL DE CONSOMMATION D'EAU CHAUDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.04.2015 FR 1553129**

(43) Date of publication of application:
**12.10.2016 Bulletin 2016/41**

(73) Proprietor: **Carrier Corporation
Palm Beach Gardens, FL 33418 (US)**

(72) Inventors:
• **AUZENET, Eric**
  **01350 CULOZ (FR)**
• **LIAUDET, Franck**
  **73100 AIX LES BAINS (FR)**
• **PLISSON, Emmanuel**
  **73310 RUFFIEUX (FR)**
• **AMBLARD, Sandrine**
  **67170 Keffendorf (FR)**
• **RION, Loris**
  **73100 AIX LES BAINS (FR)**

(74) Representative: **Lavoix
62, rue de Bonnel
69448 Lyon Cedex 03 (FR)**

(56) References cited:
**EP-A1- 2 146 309      EP-A1- 2 395 297
EP-A1- 2 395 297      EP-A2- 2 026 045
WO-A1-98/49532      WO-A2-2013/014411
GB-A- 2 518 365      US-A1- 2004 044 497
US-A1- 2007 174 013**

**Description**

The present invention relates to a method for determining a volume of liquid at a predetermined temperature. The present invention further relates to a method for calculating quantities of thermal energy and to a method for determining a profile of hot water consumption.

In the field of hot water production, it is known to use a storage device, such as a tank or a reservoir, for the continuous supply of hot water to different local distribution points. The water present in this storage device is heated by means of a heating device, such as a boiler, a solar panel, a heat pump or an electrical resistor. The heating of the water stored in the tank is thus carried out periodically, when the temperature of the water drops below a threshold temperature. However, the periodic heating generally does not take into consideration a volume of hot water still available in the storage device. Indeed, knowing the volume of hot water that is still available is very useful for optimizing the use of the heating device.

On this subject, it is known from EP-A-2 395 297, CN-B-10336673, CN-A-102589139, CN-A-103185398, WO-A-2012/162763, CN-A-202452708, WO-A-2012/164600, JP-A-0293220 and WO-A2-2013/014411 to provide the storage device with several temperature sensors arranged in one or more zones of the storage device. These temperature sensors thus make it possible to detect the temperature of the water in different zones of the storage device. Then, the temperature values are used in an algorithm designed to estimate the mean temperature of the storage device and/or the volume of hot water that is still available. Such an algorithm generally has several steps and has been found to be complex to implement and imprecise.

Therefore, there is a need for a method for determining the volume of hot water that is available, which is easier to implement and which makes the estimation performed more precise.

Problems of the same nature arise for the determination of a volume of water at a predetermined temperature in a cold water storage tank, and, more generally, of a volume of liquid at a predetermined temperature within a storage tank.

In this spirit, the invention relates to a method for determining a volume of liquid at a predetermined temperature within a liquid storage tank, the tank being equipped with at least two temperature sensors each supplying a temperature value. According to the invention, this method consists in calculating the volume of liquid at the predetermined temperature by means of a formula using at least one polynomial of order greater than or equal to two, having, as input values, temperature values supplied by the temperature sensors, and being expressed, as a function of these input variables, with a set of constant coefficients.

Thanks to the invention, the method ensures the determination of the volume of liquid that is still available at the predetermined temperature within the tank by means of a relatively simple calculation. In addition, the method is based on second-order polynomials that enable, in particular, a rapid and easy implementation and require a moderate computation power.

According to advantageous but non-obligatory aspects of the invention, such a determination method includes one or more of the following features, considered in any technically acceptable combination:
This method comprises, at least, steps consisting in:

a) estimating a volume of liquid at a temperature greater than or equal to the predetermined temperature, or estimating a volume of liquid at a temperature less than or equal to the predetermined temperature, this first estimation being carried out by means of a first polynomial of order greater than or equal to two,
b) estimating the mean temperature of the liquid of the volume estimated in step a), this second estimation being carried out by means of a polynomial of order greater than or equal to two,
c) expressing the volume of liquid at the predetermined temperature, based on the volume of liquid estimated in step a) and the mean temperature estimated in step b).

- In this case, the storage tank is advantageously provided with at least three temperature sensors each supplying a temperature value, while the first polynomial is of second order, and is expressed in the form:

$$P_1(T_1 T_2 T_3) = a_1 T_1^2 + b_1 T_1 T_2 + c_1 T_1 T_3 + d_1 T_1 + e_1 T_2^2 + f_1 T_2 T_3 + g_1 T_2 + h_1 T_3^2 + i_1 T_3 + j_1$$

and the second polynomial ($P_2$) is of second order and is expressed in the form:

$$P_2(T_1 T_2 T_3) = a_2 T_1^2 + b_2 T_1 T_2 + c_2 T_1 T_3 + d_2 T_1 + e_2 T_2^2 + f_2 T_2 T_3 + g_2 T_2 + h_2 T_3^2 + i_2 T_3 + j_2$$

where $T_1$, $T_2$ and $T_3$ are temperature values supplied by three temperature sensors, $a_1$ to $j_1$ are constant numerical coefficients of the set of coefficients of the first polynomial, and $a_2$ to $j_2$ are constant numerical coefficients of the set of coefficients of the second polynomial.

- In step c), the volume of liquid at the predetermined temperature is expressed in the form:

$$V\left(T_p\right) = P_1 * \frac{P_2 - T_f}{T_p - T_f}$$

where $P_1$ is the first polynomial, $P_2$ is the second polynomial, $T_p$ is the predetermined temperature, and $T_f$ is a temperature upon entry of the liquid into the storage tank.

- In a variant, the method comprises at least one step c') consisting in expressing the volume of liquid at the predetermined temperature directly by means of a third polynomial of order greater than or equal to two.

- In this case, the storage tank is advantageously provided with at least three temperature sensors each supplying a temperature value, while the third polynomial is of the second order and is expressed in the form:

$$P_3(T_1 T_2 T_3) = a_3\, T_1^2 + b_3\, T_1\, T_2 + c_3\, T_1\, T_3 + d_3\, T_1 + e_3\, T_2^2 + f_3\, T_2 T_3 + g_3\, T_2 + h_3\, T_3^2 + i_3\, T_3 + j_3$$

where $T_1$, $T_2$ and $T_3$ are temperature values supplied by three temperature sensors and $a_3$ to $j_3$ are constant numerical coefficients of the set of coefficients of the third polynomial.

- The method includes at least one preliminary step consisting in:

z) or z') calculating the set of coefficients of each polynomial of order greater than or equal to two based on a polynomial regression algorithm having, as input variables, known temperature values and known liquid volumes at the predetermined temperature.

- The predetermined temperature is between 30 °C and 60 °C, preferably on the order of 40 °C for a hot liquid storage tank and between -20 °C and 20 °C for a cold liquid storage tank.

The invention also relates to a method for calculating the quantities of thermal energy remaining and storable in a liquid storage tank. According to the invention, this method includes the implementation of a method as described above for determining a volume of liquid at a predetermined temperature and steps consisting in:

d) calculating the quantity of thermal energy remaining in the tank, based on the volume of liquid at the predetermined temperature, and
e) calculating the quantity of thermal energy storable in the tank, based on the volume of liquid at the predetermined temperature.

According to a particular example not part of the invention, in step d), the quantity of thermal energy remaining ($E_r$) in the tank is expressed in the form:

$$E_r = V\left(T_p\right) * k * V_b * (T_p - T_f)$$

and, in step e), the quantity of thermal energy storable ($E_s$) in the tank is expressed in the form:

$$E_s = \left( \frac{T_c - T_f}{T_p - T_f} - V\left(T_p\right) \right) * k * V_b * (T_p - T_f)$$

where $T_c$ is a setpoint temperature of the liquid, $T_p$ is the predetermined temperature, $T_f$ is a temperature upon entry of the liquid into the storage tank, $V(T_p)$ is the volume of the liquid at the predetermined temperature, $V_b$ is a volume of the storage tank, and $k$ is a constant coefficient.

Finally, the invention relates to a method for determining a profile of hot water consumption. According to the invention, the method includes the implementation, at different points in time, of a method as described above for determining a volume of water at a predetermined temperature, and steps consisting in:

f) storing the hot water volume values calculated for different points in time, and

g) determining a profile of hot water consumption.

The invention will be understood better and other advantages of said invention will become clearer in the light of the following description of a method for determining a volume of hot water, of a method for calculating quantities of thermal energy, and of a method for determining a profile of hot water consumption, description which is given only as nonlimiting example and in reference to the appended drawings, in which:

- Figure 1 is a diagrammatic representation of a hot water storage tank;
- Figure 2 is a flowchart of a method for determining a volume of hot water according to a first embodiment of the invention;
- Figure 3 is a flowchart of a method for determining a volume of hot water according to a second embodiment of the invention;
- Figure 4 is a flowchart of a method for calculating a quantity of thermal energy according to the invention; and
- Figure 5 is a flowchart of a method for determining a profile of hot water consumption according to the invention.

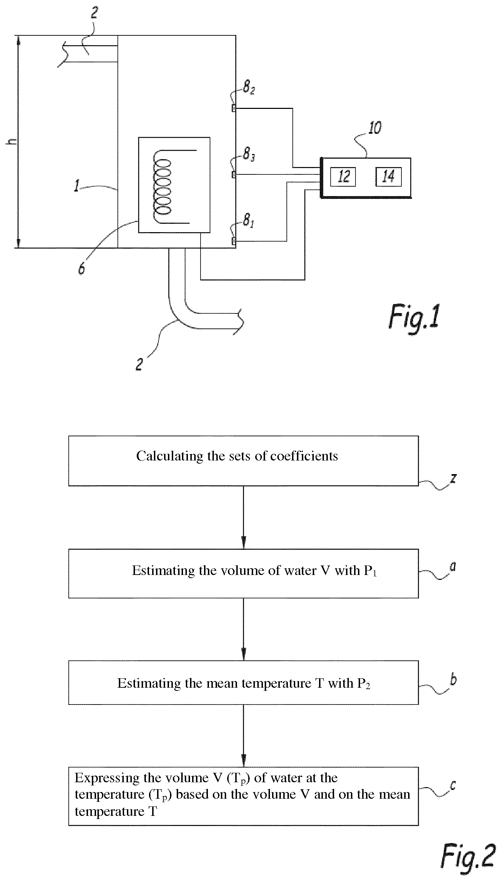

In Figure 1, a storage device 1 is represented, such as a domestic hot water tank.

In a variant, the tank 1 is used for storing thermal energy in the context of an industrial process.

The tank 1 is provided with a cold water intake 2, a hot water outlet 4, a heating device 6, three temperature sensors $8_1$, $8_2$ and $8_3$, and the control unit 10.

The intake 2 is configured for supplying the tank 1 with cold water. $T_f$ is defined as the temperature of the cold water which is supplied by the intake 2. As a nonlimiting example, the cold water temperature $T_f$ is on the order of 10 °C.

The outlet 4 is configured to supply domestic hot water, as ordered by a user, to local distribution points such as a shower, a bathtub, a washbasin or sink.

$T_p$ is defined as a temperature which is predetermined and at which the water is considered to be hot. The predetermined temperature $T_p$ is, for example, selected by the user by means of the control unit 10. The predetermined temperature $T_p$ is between 30 °C and 60 °C. As a nonlimiting example, the predetermined temperature is on the order of 40 °C.

$V(T_p)$ is defined as the volume of water contained in the tank 1, which is at a temperature greater than or equal to the first temperature $T_p$.

The heating device 6 is configured for heating the water which is stored in the tank 1. The heating device 6 is, for example, an electrical resistor positioned inside the tank 1. In a variant not shown in the figures, the heating device 6 is a boiler, a heat pump, or a solar panel.

The temperature sensors $8_1$, $8_2$ and $8_3$ are configured to detect the local temperature of the water stored in the tank 1. The sensors are, for example, sensors of the thermocouple, PT100 or NTC type.

h is used to designate the height of the tank 1. As a nonlimiting example, the first temperature sensor $8_1$ is placed in the lower portion of the tank 1, the second temperature sensor $8_2$ is placed in the upper portion, for example, at two thirds of the height h of the tank 1, and the third temperature sensor $8_3$ is placed in an intermediate position between the first and second temperature sensors $8_1$ and $8_2$. For example, the third temperature sensor $8_3$ is placed at one third of the height h of the tank 1.

In a variant not shown in the figures, the tank 1 is provided with two temperature sensors $8_1$, $8_2$, for example, placed in the lower portion of the tank 1 and at two thirds of the height h of the tank 1.

The control unit 10 comprises a memory 12 and a microcontroller 14.

The memory 12 is configured to store temperature values measured by the sensors $8_1$, $8_2$ and $8_3$ and calculated hot water volume values $V(T_p)$.

The microcontroller 14 is configured to launch the operation of the heating device 6 and to implement a method for determining the volume of hot water $V(T_p)$. The microcontroller 14 is also configured to implement a method for calculating quantities of thermal energy and a method for determining profile of domestic hot water consumption.

The above-mentioned methods are explained in the following description.

According to a first embodiment, the method for determining the volume of hot water $V(T_p)$ consists in calculating the volume of water $V(T_p)$ at the predetermined temperature $T_p$ by means of a formula using a first polynomial $P_1$ of second order and a second polynomial $P_2$ of second order. The first polynomial $P_1$ of second order is capable of estimating a volume V of water which is at a temperature greater than the predetermined temperature $T_p$. The first polynomial $P_1$ of second order has, as input variables, the temperature values $T_1$, $T_2$ and $T_3$ supplied by the temperature sensors $8_1$, $8_2$ and $8_3$. The first polynomial is expressed, as a function of these input variables, with a first set $E_1$ of constant coefficients. In practice, the first polynomial $P_1$ of second order is expressed in the form:

$$V = P_1(T_1 T_2 T_3) = a_1 T_1^2 + b_1 T_1 T_2 + c_1 T_1 T_3 + d_1 T_1 + e_1 T_2^2 + f_1 T_2 T_3 + g_1 T_2 + h_1 T_3^2 + i_1 T_3 + j_1$$

(equation 1)

where $T_1$, $T_2$ and $T_3$ are the temperature values supplied by the three temperature sensors $8_1$, $8_2$ and $8_3$, respectively, and $a_1$ to $j_1$ are constant numerical coefficients of the first set of coefficients $E_1$.

The second polynomial $P_2$ of second order is capable of estimating the mean temperature T of the volume of water V estimated by means of the first polynomial $P_1$, this mean temperature T being greater than the temperature $T_p$. The second polynomial $P_2$ of second order has, as input variables, the temperature values $T_1$, $T_2$ and $T_3$ supplied by the temperature sensors $8_1$, $8_2$ and $8_3$. The second polynomial $P_2$ is expressed, as a function of these input variables, with a second set $E_2$ of constant coefficients. In practice, the second polynomial of second order is expressed in the form:

$$T = P_2(T_1 T_2 T_3) = a_2 T_1^2 + b_2 T_1 T_2 + c_2 T_1 T_3 + d_2 T_1 + e_2 T_2^2 + f_2 T_2 T_3 + g_2 T_2 + h_2 T_3^2 + i_2 T_3 + j_2$$

(equation 2)

where $T_1$, $T_2$ and $T_3$ are the temperature values supplied by the three temperature sensors $8_1$, $8_2$ and $8_3$, respectively, and $a_2$ to $j_2$ are constant numerical coefficients of the second set of coefficients $E_2$.

The formula makes it possible to calculate the volume of water $V(T_p)$ at the predetermined temperature $T_p$. This formula has, as input variables, the estimated values of the mean temperature T and of the volume of water V at a temperature greater than or equal to the temperature $T_p$. In practice, the formula is expressed in the form:

$$V(T_p) = V * \frac{T - T_f}{T_p - T_f}$$

(equation 3)

where $T_p$ is the predetermined temperature and $T_f$ is the cold water temperature, T is the mean temperature considered above, and V is the volume considered above.

The method for determining the volume of water $V(T_p)$ at the predetermined temperature $T_p$ comprises a preliminary step z) consisting in calculating the first and second sets of coefficients $E_1$ and $E_2$ based on a polynomial regression algorithm which is known per se. For example, the polynomial regression algorithm uses the least square method.

The polynomial regression algorithm has, as input variables, the temperature values $T_1$, $T_2$ and $T_3$ supplied by the temperature sensors $8_1$, $8_2$ and $8_3$ and the volume of water $V(T_p)$ at the predetermined temperature $T_p$. In other words, in order to calculate the coefficients of the first and second polynomials, it is possible to conduct measurements where the values of the volume of hot water and the temperature values are known beforehand, or to proceed according to another approach.

Step z) is implemented once, during the calibration of the control unit 10 depending on the tank 1 with which it is associated, while steps a), b) and c) are then implemented regularly, at predetermined time intervals, or at the initiative of the user, during the use of the tank 1.

After the completion of step z), the sets of coefficients $E_1$ and $E_2$ are identified, and the first and second polynomials can be used.

Next, the method comprises a step a) consisting in estimating the volume of water V, this estimation being carried out by a calculation by means of the first polynomial $P_1$ of second order. More precisely, in step a), the microcontroller 14 of the control unit 10 receives the temperature values $T_1$, $T_2$ and $T_3$ measured by the three temperature sensors $8_1$, $8_2$, $8_3$ and proceeds with the calculation of the volume V according to equation 1. After the completion of step a), the microcontroller 14 has estimated the volume of water V at a temperature greater than or equal to the predetermined temperature $T_p$.

Next, the method comprises a step b) consisting in estimating the mean temperature T of the volume of water V, this estimation being carried out by means of the second polynomial $P_2$ of second order. More precisely, in step b), the microcontroller 14 of the control unit 10 uses the temperature values $T_1$, $T_2$ and $T_3$ measured previously by the three sensors $8_1$, $8_2$, $8_3$, and proceeds with the calculation of the mean temperature T according to equation 2. After the completion of step b), the microcontroller 14 has estimated the mean temperature T, which is higher than the predeter-

mined temperature $T_p$.

The method then comprises a step c) consisting in expressing the volume of water $V(T_p)$ at the predetermined temperature $T_p$, this calculation being conducted by means of the formula of equation 3 above and based on the volume of water V and the mean temperature T. After the completion of step c), the microcontroller 14 of the control unit 10 has calculated the volume of hot water $V(T_p)$ which is still available in the tank 1.

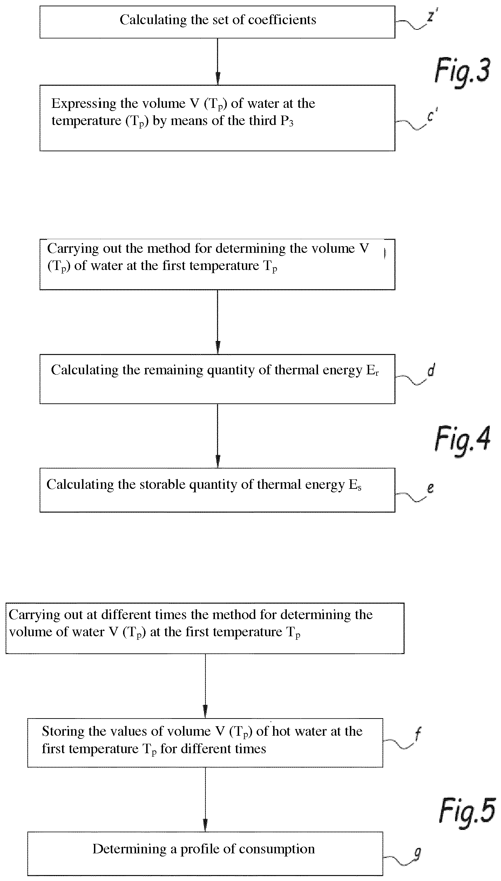

Figure 3 shows a second determination method according to the invention. This method can also be implemented with the tank 1 of Figure 1. For this second embodiment, the same notation conventions are used as for the first embodiment.

According to the second embodiment, the method consists in calculating the volume of water $V(T_p)$ at the predetermined temperature $T_p$ by means of a formula using a polynomial $P_3$, hereafter referred to as third polynomial, of second order.

The third polynomial $P_3$ of second order has, as input variables, the temperature values $T_1$, $T_2$ and $T_3$ supplied by the temperature sensors $8_1$, $8_2$ and $8_3$. The third polynomial $P_3$ is expressed, as a function of these input variables, with a third set $E_3$ of constant coefficients. In practice, the third polynomial $P_3$ of second order is expressed in the form:

$$V\left(T_p\right) = P_3(T_1 T_2 T_3) = a_3 T_1^2 + b_3 T_1 T_2 + c_3 T_1 T_3 + d_3 T_1 + e_3 T_2^2 + f_3 T_2 T_3 + g_3 T_2 + h_3 T_3^2 + i_3 T_3 + j_3$$

$$\text{(equation 4)}$$

where T1, T2 and T3 are temperature values supplied by the three temperature sensors 81, 82 and 83, and a3 to j3 are constant numerical coefficients of the set of coefficients E3 of the third polynomial.

The method for determining the volume of water $V(Tp)$ also comprises a preliminary step z') similar to step z) described above and consisting in calculating the third set of coefficients E3 based on a polynomial regression algorithm.

Next, the method has a step c') consisting in expressing the volume of water $V(Tp)$ at the predetermined temperature Tp by means of the third polynomial P3 of second order.

When the volume of hot water $V(Tp)$ is calculated by the method of Figure 2 or by the method of Figure 3, this value is compared, by the microcontroller 14, with a threshold value S.

In the case in which the volume of hot water $V(Tp)$ is greater than or equal to the threshold value S, the microcontroller 14 does not activate the heating device 6.

In the opposite case, in which the volume of hot water $V(Tp)$ is less than the threshold value S, the microcontroller 14 activates the heating device 6. In practice, the threshold value S is a minimum volume of hot water contained in the tank 1, below which it is necessary to relaunch the operation of the heating device 6 in order to ensure for the user a sufficient quantity of domestic hot water for normal use corresponding, for example, to taking a shower.

The minimum volume represented by the value of the threshold S can be a value that can vary depending on the needs of the user. For example, the threshold value S is higher when the hot water demand is high, particularly in the evening, and it is lower when the hot water demand is very low, particularly during the night.

The method for calculating thermal energy quantities makes it possible to calculate the thermal energy remaining Er and the thermal energy storable Es in the hot water tank 1.

The method for calculating quantities of thermal energy includes, first, the implementation of the method for determining the volume of water $V(Tp)$ at the predetermined temperature Tp, which is described above. In other words, this calculation method comprises, first, steps z), a), b) and c) which make it possible to determine the volume of water $V(Tp)$ at the predetermined temperature Tp.

The calculation method then has a step d) consisting in calculating the quantity of thermal energy remaining Er in the tank 1, based on the volume of water $V(Tp)$ at the predetermined temperature Tp. The quantity of thermal energy remaining Er in the tank 1 is expressed in the exemplary form not part of the invention:

$$E_r = V\left(T_p\right) * k * V_b * (T_p - T_f)$$

$$\text{(equation 5)}$$

where $T_f$ is the temperature upon entry of the water into the tank 1, that is to say the cold water temperature, $V_b$ is the volume of the tank 1, and k is a constant coefficient.

For example, the constant coefficient k is between 1 and 2, preferably between 1.1 and 1.2, and more preferably approximately 1.16.

After the completion of step d), the quantity of thermal energy remaining $E_r$ is calculated.

Next, the calculation method includes a step e) consisting in calculating the quantity of thermal energy storable $E_s$ in the tank 1, based on the volume of water at the predetermined temperature $T_p$. The quantity of thermal energy storable $E_s$ in the tank 1 is expressed in the exemplary form not part of the invention:

$$E_s = \left( \frac{T_c - T_f}{T_p - T_f} - V(T_p) \right) * k * V_b * (T_p - T_f)$$

(equation 6)

where $T_c$ is a setpoint temperature of the water that is selected by the user, $T_f$ is the cold water temperature, $V_b$ is the volume of the tank 1, and k is the constant coefficient. For example, the setpoint temperature of the water $T_c$ is 55 °C.

After the completion of step e), the quantity of thermal energy storable $E_s$ is calculated.

Steps d) and e) can be implemented during the use of the tank 1, regularly, or at the initiative of the user.

In a variant not part of the invention, the quantity of thermal energy storable $E_s$ is used for the calculation of the time t for recharging the tank. The recharging time t is expressed in the form

$$t = E_s/W$$

(equation 7)

where W is the thermal power of the heating device 6.

According to a variant of the calculation method, the values of the calculated quantities of energy are supplied to the user, so that he can manually activate the heating device 6 if he so desires.

The method for determining a profile of consumption of domestic hot water makes it possible to determine the hot water consumption of the user over time. For this purpose, the determination method includes, first, the implementation, at different points in time, of the method for determining the volume of water $V(T_p)$ at the predetermined temperature $T_p$, which is described above.

In other words, for different points in time, defined, for example, by the microcontroller 14 or selected by the user, the determination method comprises an iterative loop in which, in each iteration, the microcontroller 14 implements the method for determining the volume $V(T_p)$.

In practice, for each selected point in time, the determination method comprises steps a), b) and c). After the completion of the iterative loop, the hot water volume values $V(T_p)$ are calculated for the selected points in time.

Next, the method then includes a step f) consisting in storing the hot water volume values $V(T_p)$ calculated for the different points in time. The hot water volume values $V(T_p)$ are stored in the memory 12 of the control unit 10.

The determination method then includes a step g) consisting in determining a profile of hot water consumption. In step g), the microcontroller 14 of the control unit 10 retrieves the hot water volume values $V(T_p)$ stored in the memory 12 and proceeds with the construction of the consumption profile.

This profile is, for example, a curve which associates with each hot water volume value $V(T_p)$ the point in time when it was calculated. The consumption profile thus determined is, for example, used to predict at what point in time the volume of hot water $V(T_p)$ will reach the minimum threshold value S, so as to activate the operation of the heating device 6 before the threshold value S is reached, and so as to optimize the use of the heating device 6.

According to a variant, the first and second polynomials $P_1$ and $P_2$ as well as the third polynomial $P_3$ are of order greater than two.

According to another variant which is not shown in the figures, the tank 1 is provided with two temperature sensors $8_1$ and $8_2$. Then, the polynomials $P_1$, $P_2$ or $P_3$ of order greater than or equal to two have, as input variables, the temperature values $T_1$ and $T_2$.

According to yet another variant, the tank 1 is provided with four temperature sensors or with more than four sensors, and the polynomials $P_1$, $P_2$ or $P_3$ of order greater than or equal to two have, as input variables, the temperature values supplied by these sensors.

Regardless of the number of sensors of the installation, n is used to designate the number of temperature sensors, n being a whole number greater than or equal to two. $8_1$, $8_2$ ..., $8_n$ are then used to designate the temperature sensors, and $T_1$, $T_2$, ..., $T_n$ are used to designate the temperature values supplied by the sensors. The polynomials $P_1$, $P_2$ or $P_3$ of order greater than or equal to two have, as input variables, the n temperature values.

The invention is represented in the context of the use of a domestic hot water tank. In a variant, the invention is applicable to a cold water tank used for applications in industrial and/or building cooling. The predetermined temperature $T_p$ is then between -20 °C and 20 °C. In this case, in the above-mentioned step a), the volume of water at a temperature less than or equal to the predetermined temperature $T_p$ is estimated, and the temperature $T_f$ upon entry of the water into the tank is hotter than this predetermined temperature.

More generally, the invention is applicable to any storage tank containing a liquid that tends to become stratified, such as pure water or water supplemented, for example, with ethanol, ethylene glycol, propylene glycol, calcium chloride or other solutions.

The embodiments and variants envisaged above can be combined with one another to generate new embodiments of the invention.

**Claims**

1. Method for determining a volume ($V(T_p)$) of liquid at a predetermined temperature ($T_p$) within a liquid storage tank (1), the tank being provided with at least two temperature sensors ($8_1$, $8_2$, ..., $8_n$) each supplying a temperature value ($T_1$, $T_2$, ..., $T_n$), the method being **characterized in that** it consists in calculating the volume of liquid ($V(T_p)$) at the predetermined temperature ($T_p$) by means of a formula using at least one polynomial ($P_1$, $P_2$, $P_3$) of order greater than or equal to two, having, as input variables, temperature values ($T_1$, $T_2$, ..., $T_n$) supplied by the temperature sensors ($8_1$, $8_2$, ..., $8_n$), and being expressed, as a function of these input variables, with a set ($E_1$, $E_2$, $E_3$) of constant coefficients and **in that** it includes at least one preliminary step consisting in:

   z) or z') calculating the set ($E_1$, $E_2$, $E_3$) of coefficients of each polynomial ($P_1$, $P_2$, $P_3$) of order greater than or equal to two based on a polynomial regression algorithm having, as input variables, known temperature values ($T_1$, $T_2$, ..., $T_n$) and known liquid volumes ($V(T_p)$) at the predetermined temperature ($T_p$).

2. Method according to Claim 1, **characterized in that** it comprises, at least, steps consisting in:

   a) estimating a volume ($V$) of liquid at a temperature greater than or equal to the predetermined temperature ($T_p$), or estimating a volume of liquid at a temperature less than or equal to the predetermined temperature, this first estimation being carried out by means of a first polynomial ($P_1$) of order greater than or equal to two,
   b) estimating the mean temperature ($T$) of the liquid of the volume estimated in step a), this second estimation being carried out by means of a polynomial ($P_2$) of order greater than or equal to two,
   c) expressing the volume of liquid ($V(T_p)$) at the predetermined temperature, based on the volume of liquid ($V$) estimated in step a) and the mean temperature ($T$) estimated in step b).

3. Method according to Claim 2, **characterized in that** the storage tank (1) is provided with at least three temperature sensors ($8_1$, $8_2$, $8_3$, ... $8_n$) each supplying a temperature value ($T_1$, $T_2$, $T_3$, ... $T_n$), while:

   - the first polynomial ($P_1$) is of second order and is expressed in the form:

   $$P_1(T_1 T_2 T_3) = a_1 T_1^2 + b_1 T_1 T_2 + c_1 T_1 T_3 + d_1 T_1 + e_1 T_2^2 + f_1 T_2 T_3 + g_1 T_2 + h_1 T_3^2 + i_1 T_3 + j_1$$

   - the second polynomial ($P_2$) is of second order and is expressed in the form:

   $$P_2(T_1 T_2 T_3) = a_2 T_1^2 + b_2 T_1 T_2 + c_2 T_1 T_3 + d_2 T_1 + e_2 T_2^2 + f_2 T_2 T_3 + g_2 T_2 + h_2 T_3^2 + i_2 T_3 + j_2$$

   where $T_1$, $T_2$ and $T_3$ are temperature values supplied by three temperature sensors ($8_1$, $8_2$, $8_3$), $a_1$ to $j_1$ are constant numerical coefficients of the set of coefficients ($E_1$) of the first polynomial ($P_1$), and $a_2$ to $j_2$ are constant numerical coefficients of the set of coefficients ($E_2$) of the second polynomial ($P_2$).

4. Method according to Claim 1 or 2, **characterized in that**, in step c), the volume of liquid ($V(T_p)$) at the predetermined temperature ($T_p$) is expressed in the form:

   $$V(T_p) = P_1 * \frac{P_2 - T_f}{T_p - T_f}$$

   where $P_1$ is the first polynomial, $P_2$ is the second polynomial, $T_p$ is the predetermined temperature, and $T_f$ is a temperature upon entry of the liquid into the storage tank (1).

5. Method according to Claim 1, **characterized in that** it comprises, at least, a step consisting in:
c') expressing the volume of liquid $(V(T_p))$ at the predetermined temperature $(T_p)$ directly by means of a third polynomial $(P_3)$ of order greater than or equal to two.

6. Method according to Claim 5, **characterized in that** the storage tank (1) is provided with at least three temperature sensors $(8_1, 8_2, 8_3, ... 8_n)$ each supplying a temperature value $(T_1, T_2, T_3, ... T_n)$, while the third polynomial $(P_3)$ is of the second order and is expressed in the form:

$$P_3(T_1 T_2 T_3) = a_3 T_1^2 + b_3 T_1 T_2 + c_3 T_1 T_3 + d_3 T_1 + e_3 T_2^2 + f_3 T_2 T_3 + g_3 T_2 + h_3 T_3^2 + i_3 T_3 + j_3$$

where $T_1$, $T_2$ and $T_3$ are temperature values supplied by three temperature sensors $(8_1, 8_2, 8_3)$, and $a_3$ to $j_3$ are constant numerical coefficients of the set of coefficients $(E_3)$ of the third polynomial $(P_3)$.

7. Method according to any one of the preceding claims, **characterized in that** the predetermined temperature $(T_p)$ is between 30 °C and 60 °C, preferably on the order of 40 °C for a hot liquid storage tank and between -20 °C and 20 °C for a cold liquid storage tank.

8. Method for calculating quantities of thermal energy remaining $(E_r)$ and storable $(E_s)$ in a liquid storage tank (1), **characterized in that** it includes:

- implementing a method according to one of Claims 1 to 7 for determining a volume of liquid $(V(T_p))$ at a predetermined temperature $(T_p)$, and
- steps consisting in:

d) calculating the quantity of thermal energy remaining $(E_r)$ in the tank (1), based on the volume of liquid at the predetermined temperature, and
e) calculating the quantity of thermal energy storable $(E_s)$ in the tank, based on the volume of liquid at the predetermined temperature.

9. Method for determining a profile of domestic hot water consumption, **characterized in that** it includes:

- implementing, at different points in time, a method according to any one of Claims 1 to 7 for determining a volume of hot water $(V(T_p))$ at a predetermined temperature $(T_p)$, and
- steps consisting in:

f) storing the hot water volume values calculated for different points in time, and
g) determining a profile of hot water consumption.

**Patentansprüche**

1. Verfahren zur Bestimmung eines Flüssigkeitsvolumens $(V(T_p))$ bei einer vorgegebenen Temperatur $(T_p)$ in einem Flüssigkeitsbehälter (1), wobei der Behälter mit mindestens zwei Temperatursensoren $(8_1, 8_2, ..., 8_n)$ ausgestattet ist, die jeweils einen Temperaturwert $(T_1, T_2, ..., T_n)$ liefern, wobei das Verfahren **dadurch gekennzeichnet ist, dass** es darin besteht, das Flüssigkeitsvolumen $(V(T_p))$ bei einer vorgegebenen Temperatur mittels einer Formel zu berechnen, die mindestens ein Polynom $(P_1, P_2, P_3)$ zweiter oder höherer Ordnung verwendet, wobei sie als Eingangsvariablen von den Temperatursensoren $(8_1, 8_2, ..., 8_n)$ gelieferte Temperaturwerte $(T_1, T_2, ..., T_n)$ aufweist und als Funktion von diesen Eingangsvariablen durch einen Satz $(E_1, E_2, E_3)$ von konstanten Koeffizienten ausgedrückt wird und dadurch, dass es mindestens einen vorausgehenden Schritt einschließt, der darin besteht:
z) oder z') Berechnen des Koeffizientensatzes $(E_1, E_2, E_3)$ jedes Polynoms $(P_1, P_2, P_3)$ zweiter oder höherer Ordnung, basierend auf einem polynomialen Regressionsalgorithmus, der als Eingangsvariablen bekannte Temperaturwerte $(T_1, T_2, ..., T_n)$ und bekannte Flüssigkeitsvolumen $(V(T_p))$ bei der vorgegebenen Temperatur $(T_p)$ aufweist.

2. Verfahren nach Anspruch 1, **dadurch gekennzeichnet, dass** es mindestens Schritte umfasst, die darin bestehen:

a) ein Flüssigkeitsvolumen (V) bei einer Temperatur, die höher als die oder gleich der vorgegebenen Temperatur ($T_p$) ist zu schätzen, oder ein Flüssigkeitsvolumen bei einer Temperatur, die niedriger als die oder gleich der vorgegebenen Temperatur ist zu schätzen, wobei diese erste Schätzung mithilfe eines ersten Polynoms ($P_1$) zweiter oder höherer Ordnung durchgeführt wird,

b) die mittlere Temperatur (T) der Flüssigkeit des in a) geschätzten Volumens zu schätzen, wobei diese zweite Schätzung mithilfe eines zweiten Polynoms ($P_2$) zweiter oder höherer Ordnung durchgeführt wird,

c) das Flüssigkeitsvolumen ($V(T_p)$) bei der vorgegebenen Temperatur auf der Grundlage des in Schritt a) geschätzten Flüssigkeitsvolumens (V) und der in Schritt b) geschätzten mittleren Temperatur (T) auszudrücken.

3. Verfahren nach Anspruch 2, **dadurch gekennzeichnet, dass** der Behälter (1) mit mindestens drei Temperatursensoren ($8_1$, $8_2$, $8_3$, ... $8_n$) ausgestattet ist, die jeweils einen Temperaturwert ($T_1$, $T_2$, $T_3$, ..., $T_n$) liefern, wobei:

- das erste Polynom ($P_1$) zweiter Ordnung ist und folgendermaßen ausgedrückt wird:

$$P_1(T_1 T_2 T_3) = a_1 T_1{}^2 + b_1 T_1 T_2 + c_1 T_1 T_3 + d_1 T_1 + e_1 T_2{}^2 + f_1 T_2 T_3 + g_1 T_2 + h_1 T_3{}^2 + i_1 T_3 + j_1$$

- das zweite Polynom ($P_2$) zweiter Ordnung ist und folgendermaßen ausgedrückt wird:

$$P_2(T_1 T_2 T_3) = a_2 T_1{}^2 + b_2 T_1 T_2 + c_2 T_1 T_3 + d_2 T_1 + e_2 T_2{}^2 + f_2 T_2 T_3 + g_2 T_2 + h_2 T_3{}^2 + i_2 T_3 + j_2$$

wobei $T_1$, $T_2$ und $T_3$ von den drei Temperatursensoren ($8_1$, $8_2$, $8_3$) gelieferte Temperaturwerte sind, $a_1$ bis $j_1$ kontante numerische Koeffizienten des Koeffizientensatzes ($E_1$) des ersten Polynoms ($P_1$) sind und $a_2$ bis $j_2$ kontante numerische Koeffizienten des Koeffizientensatzes ($E_2$) des zweiten Polynoms ($P_2$) sind.

4. Verfahren nach Anspruch 1 oder 2, **dadurch gekennzeichnet, dass** in Schritt c) das Flüssigkeitsvolumen ($V(T_p)$) bei der vorgegebenen Temperatur ($T_p$) folgendermaßen ausgedrückt wird:

$$V(T_p) = P_1 * \frac{P_2 - T_f}{T_p - T_f}$$

wobei $P_1$ das erste Polynom, $P_2$ das zweite Polynom, $T_p$ die vorgegebene Temperatur und $T_f$ die Temperatur bei Eintritt der Flüssigkeit in den Behälter (1) ist.

5. Verfahren nach Anspruch 1, **dadurch gekennzeichnet, dass** es mindestens einen Schritt umfasst, der darin besteht: c') das Flüssigkeitsvolumen ($V(T_p)$) bei der vorgegebenen Temperatur ($T_p$) direkt mittels eines dritten Polynoms ($P_3$) zweiter oder höherer Ordnung auszudrücken.

6. Verfahren nach Anspruch 5, **dadurch gekennzeichnet, dass** der Behälter (1) mit mindestens drei Temperatursensoren ($8_1$, $8_2$, $8_3$, ... $8_n$) ausgestattet ist, die jeweils einen Temperaturwert ($T_1$, $T_2$, $T_3$, ... $T_n$) liefern, wobei das dritte Polynom ($P_3$) zweiter Ordnung ist und folgendermaßen ausgedrückt wird:

$$P_3(T_1 T_2 T_3) = a_3 T_1{}^2 + b_3 T_1 T_2 + c_3 T_1 T_3 + d_3 T_1 + e_3 T_2{}^2 + f_3 T_2 T_3 + g_3 T_2 + h_3 T_3{}^2 + i_3 T_3 + j_3$$

wobei $T_1$, $T_2$ und $T_3$ von den drei Temperatursensoren ($8_1$, $8_2$, $8_3$) gelieferte Temperaturwerte sind und $a_3$ bis $j_3$ konstante numerische Koeffizienten des Koeffizientensatzes ($E_3$) des dritten Polynoms ($P_3$) sind.

7. Verfahren nach einem der vorangegangenen Ansprüche, **dadurch gekennzeichnet, dass** die vorgegebene Temperatur ($T_p$) zwischen 30 °C und 60 °C, im Fall eines Heißflüssigkeitsbehälters vorzugsweise bei etwa 40 °C und im Fall eines Kaltflüssigkeitsbehälters zwischen -20 °C und 20 °C liegt.

8. Verfahren zur Berechnung von in einem Flüssigkeitsbehälter (1) verbleibenden ($E_r$) und speicherbaren ($E_s$) thermischen Energiemengen, **dadurch gekennzeichnet, dass** es einschließt:

- Implementieren eines Verfahrens nach einem der Ansprüche 1 bis 7 zur Bestimmung eines Flüssigkeitsvolumens ($V(T_p)$) bei einer vorgegebenen Temperatur ($T_p$) und
- Schritte, die darin bestehen:

d) die im Behälter (1) verbleibende thermische Energiemenge ($E_r$) basierend auf dem Flüssigkeitsvolumen bei der vorgegebenen Temperatur zu berechnen und
e) die im Behälter speicherbare thermische Energiemenge ($E_s$) basierend auf dem Flüssigkeitsvolumen bei der vorgegebenen Temperatur zu berechnen.

**9.** Verfahren zur Bestimmung eines Profils eines häuslichen Heißwasserverbrauchs, **dadurch gekennzeichnet, dass** es einschließt:

- Implementieren eines Verfahrens nach einem der Ansprüche 1 bis 7 zu verschiedenen Zeitpunkten zur Bestimmung eines Heißwasservolumens ($V(T_p)$) bei einer vorgegebenen Temperatur ($T_p$) und
- Schritte, die darin bestehen:

f) die Heißwasservolumenwerte, die für verschiedene Zeitpunkte berechnet wurden, zu speichern und
g) ein Profil eines Heißwasserverbrauchs zu bestimmen.

**Revendications**

**1.** Procédé de détermination d'un volume ($V(T_p)$) de liquide à une température ($T_p$) prédéterminée au sein d'un ballon (1) de stockage de liquide, le ballon étant équipé d'au moins deux capteurs ($8_1, 8_2,..., 8_n$) de température fournissant chacun une valeur ($T_1, T_2, ..., T_n$) de température, le procédé étant **caractérisé en ce qu'**il consiste à calculer le volume de liquide ($V(T_p)$) à la température prédéterminée ($T_p$) au moyen d'une formule mettant en oeuvre au moins un polynôme ($P_1, P_2, P_3$) d'ordre supérieur ou égal à deux, ayant pour variables d'entrée des valeurs ($T_1, T_2,..., T_n$) de température fournies par les capteurs de température ($8_1, 8_2,..., 8_n$) et s'exprimant, en fonction de ces variables d'entrée, avec un ensemble ($E_1, E_2, E_3$) de coefficients constants, **caractérisé en ce qu'**il comprend au moins une étape préalable consistant à calculer l'ensemble ($E_1, E_2, E_3$) de coefficients de chaque polynôme ($P_1, P_2, P_3$) d'ordre supérieur ou égal à deux à partir d'un algorithme de régression polynomiale ayant pour variables d'entrée des valeurs de température connues ($T_1, T_2, ..., T_n$) et des volumes de liquide connus ($V(T_p)$) à la température prédéterminée ($T_p$).

**2.** Procédé selon la revendication 1, **caractérisé en ce qu'**il comporte, au moins, des étapes consistant à :

a) estimer un volume (V) de liquide à une température supérieure ou égale à la température prédéterminée ($T_p$) ou estimer un volume de liquide à une température inférieure ou égale à la température prédéterminée, cette première estimation étant réalisée à l'aide d'un premier polynôme ($P_1$) d'ordre supérieur ou égal à deux,
b) estimer la température moyenne (T) du liquide du volume estimé à l'étape a), cette deuxième estimation étant réalisée à l'aide d'un deuxième polynôme ($P_2$) d'ordre supérieur ou égal à deux,
c) exprimer le volume de liquide ($V(T_p)$) à la température prédéterminée, à partir du volume de liquide (V) estimé à l'étape a) et de la température moyenne (T) estimée à l'étape b).

**3.** Procédé selon la revendication 2, **caractérisé en ce que** le ballon de stockage (1) est équipé d'au moins trois capteurs de température ($8_1, 8_2, 8_3, ...8_n$) fournissant chacun une valeur ($T_1, T_2, T_3, ... T_n$) de température, alors que :

- le premier polynôme ($P_1$) est du deuxième ordre et s'exprime sous la forme :

$$P_1(T_1 T_2 T_3) = a_1 T_1^2 + b_1 T_1 T_2 + c_1 T_1 T_3 + d_1 T_1 + e_1 T_2^2 + f_1 T_2 T_3 + g_1 T_2 + h_1 T_3^2 + i_1 T_3 + j_1$$

- le deuxième polynôme ($P_2$) est du deuxième ordre et s'exprime sous la forme :

$$P_2(T_1 T_2 T_3) = a_2\, T_1^2 \; + \; b_2\, T_1\, T_2 \; + \; c_2\, T_1\, T_3 \; + \; d_2\, T_1 \; + \; e_2\, T_2^2 + f_2\, T_2 T_3 \; + \; g_2\, T_2 \; + \; h_2\, T_3^2$$
$$+ \; i_2\, T_3 \; + j_2$$

où $T_1$, $T_2$ et $T_3$ sont des valeurs de température fournies par trois capteurs de température ($8_1$, $8_2$, $8_3$), $a_1$ à $j_1$ sont des coefficients numériques constants de l'ensemble de coefficients ($E_1$) du premier polynôme ($P_1$) et $a_2$ à $j_2$ sont des coefficients numériques constants de l'ensemble de coefficients ($E_2$) du deuxième polynôme ($P_2$).

4. Procédé selon la revendication 1 ou 2, **caractérisé en ce que**, à l'étape c), le volume de liquide ($V(T_p)$) à la température prédéterminée ($T_p$) est exprimé sous la forme :

$$V\!\left(T_p\right) = P_1 * \frac{P_2 - T_f}{T_p - T_f}$$

où $P_1$ est le premier polynôme, $P_2$ est le deuxième polynôme, $T_p$ est la température prédéterminée et $T_f$ est une température d'entrée du liquide dans le ballon de stockage (1).

5. Procédé selon la revendication 1, **caractérisé en ce qu'**il comporte, au moins, une étape consistant à :
c') exprimer le volume de liquide ($V(T_p)$) à la température prédéterminée ($T_p$) directement à l'aide d'un troisième polynôme ($P_3$) d'ordre supérieur ou égal à deux.

6. Procédé selon la revendication 5, **caractérisé en ce que** le ballon de stockage (1) est équipé d'au moins trois capteurs de température ($8_1$, $8_2$, $8_3$, ...$8_n$) fournissant chacun une valeur ($T_1$, $T_2$, $T_3$, ...$T_n$) de température, alors que le troisième polynôme ($P_3$) est du deuxième ordre et s'exprime sous la forme :

$$P_3(T_1 T_2 T_3) = a_3\, T_1^2 \; + \; b_3\, T_1\, T_2 \; + \; c_3\, T_1\, T_3 \; + \; d_3\, T_1 \; + \; e_3\, T_2^2 + f_3\, T_2 T_3 \; + \; g_3\, T_2 \; + \; h_3\, T_3^2$$
$$+ \; i_3\, T_3 \; + j_3$$

où $T_1$, $T_2$ et $T_3$ sont des valeurs de température fournies par trois capteurs de température ($8_1$, $8_2$, $8_3$) et $a_3$ à j3 sont des coefficients numériques constants de l'ensemble de coefficients ($E_3$) du troisième polynôme ($P_3$).

7. Procédé selon l'une des revendications précédentes, **caractérisé en ce que** la température prédéterminée ($T_p$) est comprise entre 30°C et 60°C, de préférence de l'ordre de 40°C pour un ballon de stockage de liquide chaud et entre -20°C et 20°C pour un ballon de stockage de liquide froid.

8. Procédé de calcul de quantités d'énergie thermique restant ($E_r$) et stockable ($E_s$) dans un ballon (1) de stockage de liquide, **caractérisé en ce qu'**il comprend :

- la mise en oeuvre d'un procédé selon l'une des revendications 1 à 7 pour déterminer un volume de liquide ($V(T_p)$) à une température prédéterminée ($T_p$), et
- des étapes consistant à :

   d) calculer la quantité d'énergie thermique restant ($E_r$) dans le ballon (1), à partir du volume de liquide à la température prédéterminée, et
   e) calculer la quantité d'énergie thermique stockable ($E_s$) dans le ballon, à partir du volume de liquide à la température prédéterminée.

9. Procédé de détermination d'un profil de consommation d'eau chaude sanitaire, **caractérisé en ce qu'**il comprend :

- la mise en oeuvre, à différents instants, d'un procédé selon l'une des revendications 1 à 7 pour déterminer un volume d'eau chaude ($V(T_p)$) à une température prédéterminée ($T_p$), et
- des étapes consistant à :

   f) stocker les valeurs de volume d'eau chaude calculées pour différents instants, et

g) déterminer un profil de consommation d'eau chaude.

Fig.1

| Calculating the sets of coefficients | z |
| --- | --- |

| Estimating the volume of water V with $P_1$ | a |
| --- | --- |

| Estimating the mean temperature T with $P_2$ | b |
| --- | --- |

| Expressing the volume V ($T_p$) of water at the temperature ($T_p$) based on the volume V and on the mean temperature T | c |
| --- | --- |

Fig.2

Calculating the set of coefficients — $z'$

**Fig.3**

Expressing the volume V ($T_p$) of water at the temperature ($T_p$) by means of the third $P_3$ — $c'$

Carrying out the method for determining the volume V ($T_p$) of water at the first temperature $T_p$

Calculating the remaining quantity of thermal energy $E_r$ — $d$

**Fig.4**

Calculating the storable quantity of thermal energy $E_s$ — $e$

Carrying out at different times the method for determining the volume of water V ($T_p$) at the first temperature $T_p$

Storing the values of volume V ($T_p$) of hot water at the first temperature $T_p$ for different times — $f$

**Fig.5**

Determining a profile of consumption — $g$

## REFERENCES CITED IN THE DESCRIPTION

**Patent documents cited in the description**

- EP 2395297 A
- CN 10336673 B
- CN 102589139 A
- CN 103185398 A
- WO 2012162763 A
- CN 202452708 A
- WO 2012164600 A
- JP 0293220 A
- WO 2013014411 A2